# EUROPEAN PATENT APPLICATION

(11) **EP 4 099 055 A1**
(43) Date of publication of application: **07.12.2022**
(21) Application number: 21176786.8
(22) Date of filing: 31.05.2021
(51) Int. Cl.: G01S 13/90, G01S 15/89, G01S 13/86, G01S 13/88, H04M 1/02

(54) **SYNTHETIC APERTURE IMAGING**

(71) Applicant: Nokia Technologies Oy, 02610 Espoo (FI)
(72) Inventor: CRONIN, Harry, Cambridge (GB); WRIGHT, Christopher, London (GB); SCHNABEL, William, Farnham (GB); CATTON, Phil, Cambridge (GB)
(74) Representative: Nokia EPO representatives

(57) **Abstract**

Synthetic aperture imaging techniques are disclosed. An example handheld electronic device includes a first component coupled in a movable relationship with a second component, a signal source disposed at the first component to direct outgoing signals toward an area of interest, and a signal receiver disposed at the second component to detect return signals reflected from the area of interest due to the outgoing signals. The device also includes a processor and computer program code configured to cause the electronic device to measure signal characteristics of the return signals at a plurality of measurement positions as the second component is adjusted relative to the first component to change a distance between the signal source and signal receiver. The signal characteristics are processed to generate image data for objects in the area of interest.

## Description

### TECHNOLOGICAL FIELD

Example embodiments relate to techniques for generating a synthetic aperture for imaging applications.

### BACKGROUND

Radar imaging and acoustic imaging have various possible applications in the smart phone market. Such imaging techniques can be used to generate additional image data beyond what can be obtained using an optical camera alone, such as material properties, subsurface features, and others. Such data may have various applications, such as improving the realism of virtual reality environments.

### BRIEF SUMMARY

The scope of protection sought for various embodiments of the invention is set out by the independent claims. The embodiments and features, if any, described in this specification that do not fall under the scope of the independent claims are to be interpreted as examples useful for understanding various embodiments of the invention.

According to various embodiments there is provided an apparatus comprising means for: directing outgoing signals from a first component toward an area of interest; detecting, at a second component, return signals reflected from the area of interest due to the outgoing signals, wherein the first component is coupled in a movable relationship with the second component; and measuring signal characteristics of the return signals at a plurality of measurement positions as the second component is adjusted relative to the first component to change a distance between the means for directing and the means for detecting. The signal characteristics are processed to generate image data for objects in the area of interest.

The apparatus may further comprise means for: detecting return signals at the first component; and processing the return signals detected at the first component to generate motion correction data to be applied to the signal characteristics to correct for user movement of the apparatus.

The outgoing signals and return signals may be sound waves or radio frequency (RF) signals.

The apparatus may further comprise means for measuring the distance between the means for directing and the means for detecting based on propagation of sounds waves generated at the first component and received at the second component.

The apparatus may further comprise means for cancelling self-interference between the means for directing and the means for detecting based on a Doppler shift of signals received at the means for detecting directly from the means for directing without being emitted into the area of interest.

The apparatus may further comprise means for capturing an optical image of the area of interest, wherein the image data comprises material properties that are correlated with and assigned to objects within the optical image.

At least some of the image data can relate to subsurface features within the area of interest. The image data can include material properties that are added to a virtual reality model of the area of interest.

The apparatus may further comprise means for guiding a user of the electronic device to move the electronic device through a path approximating a baseline; and means for adjusting the second component to change the position of the means for detecting to correct for positional inaccuracies during user movement.

According to various embodiments there is also provided an method comprising: transmitting outgoing signals from a signal source disposed at a first component toward an area of interest; detecting return signals at a signal receiver disposed in a second component; measuring signal characteristics of the return signals at a plurality of measurement positions as the second component is adjusted relative to the first component to change a distance between the signal source and signal receiver; and processing the signal characteristics to identify material properties of objects in the area of interest.

The method may further comprise computing the distance between the signal source and the signal receiver based on propagation of sound waves generated by an acoustic speaker disposed at the first component and a microphone disposed at the second component.

The method may further comprise: measuring a Doppler shift of signals received at the signal receiver; and canceling self-interference between the signal source and the signal receiver based, at least in part, on the Doppler shift.

According to various embodiments there is also provided a computer-readable medium comprising computer program code for causing an apparatus to perform at least the following: direct a signal source disposed at a first component to transmit outgoing signals toward an area of interest; direct a signal receiver disposed at a second component to detect return signals reflected from the area of interest due to the outgoing signals, wherein the second component is coupled in a movable relationship with the first component; and measure signal characteristics of the return signals at a plurality of measurement positions as the second component is adjusted relative to the first component to change a distance between the signal source and signal receiver. The signal characteristics are processed to identify material properties of objects in the area of interest.

The computer-readable medium of claim 14 may also comprise computer program code for causing the apparatus to: direct a second signal receiver disposed at the first component to receive additional return signals reflected from the area of interest, wherein the second signal receiver is configured to maintain a constant distance relationship with the signal source; and process the additional return signals to generate motion correction data to be applied to the signal characteristics of the return signals to correct for user movement.

### BRIEF DESCRIPTION OF THE DRAWINGS

Example embodiments will now be described, by way of non-limiting example, with reference to the accompanying drawings, in which:
Figs. 1A, 1B, and 1C illustrate an example synthetic aperture imaging technique in accordance with embodiments;
Figs. 2A, 2B, and 2C illustrate another example synthetic aperture imaging technique in accordance with embodiments;
Figs. 3A and 3B show a process flow diagram illustrating an example method for performing synthetic aperture imaging using a handheld electronic device;
Fig. 4 is a block diagram of an example device configured for synthetic aperture imaging in accordance with embodiments; and
Fig. 5 is a process flow diagram summarizing a method of performing synthetic aperture imaging in accordance with embodiments.

### DETAILED DESCRIPTION

Synthetic aperture imaging is a technique for using the motion of an imaging apparatus to improve the spatial resolution of the resulting image. Synthetic aperture imaging can apply to radar imaging, acoustic imaging, and others. Generally, the larger an antenna's aperture, the greater spatial resolution that can be obtained through radar imaging. In synthetic aperture radar, the motion of the imaging apparatus during the imaging process allows the apparatus to capture return signals over a larger baseline, which creates a large synthetic aperture. The synthetic aperture increases the spatial resolution in much the same way that a large physical aperture would. The same principle applies to acoustic imaging.

The present disclosure describes improved synthetic aperture imaging techniques that can be employed in a handheld electronic device such as a smartphone. The imaging techniques described herein can be used for material analysis, detection of hidden subsurface objects, facial recognition, and other applications. Techniques such as material analysis using synthetic aperture radar may not be easy or intuitive for many smartphone users. Motion errors, both along the baseline and in the device-object standoff dimension, can introduce errors into the return signal which may cause misclassification of materials. Furthermore, the precision with which material classification and other goals can be carried out will depend on the number of elements within the receiving antenna array, which is limited by the small form factor of the smartphone.

The techniques disclosed herein enable the measurement of synthetic aperture radar measurements using the controlled opening of a reconfigurable handheld electronic device such as a smartphone. For example, a reconfigurable device such as a scrolling phone may take active scene measurements with increased precision by controlled relative motion of its transmitting and receiving apparatus, while also generating a stable reference signal by treating one of its antennas as a fixed point to compensate for unwanted device-scene relative motion.

In radar-based embodiments, the transmitting and receiving apparatus may be separate radio frequency (RF) antennas or antenna arrays in the smartphone. In acoustic embodiments, the transmitting device may be an acoustic speaker and the receiving device may be a microphone.

The handheld electronic device can include a first component coupled in a movable relationship with a second component, such as a sliding screen. A signal source disposed at the first component directs outgoing signals toward an area of interest, while a signal receiver disposed at the second component detects return signals reflected from the area of interest due to the outgoing signals. Signal characteristics of the return signals may be measured at a plurality of measurement positions as the second component is adjusted relative to the first component to change a distance between the signal source and signal receiver.

In some embodiments, the first component is held approximately motionless by the user and the adjustment of the second component is used to enable the receiving array to simulate a larger array. The device motion may be motorized or user controlled.

In some embodiments, the user may be guided to move the entire electronic device over a baseline larger than the handheld device itself. In such embodiments, the movement of the second component may be motorized and controlled to compensate for user error during generation of the synthetic aperture baseline.

The measured signal characteristics of the return signals may be stored and processed to generate image data for objects in the area of interest. Such image data may include material properties of objects in the area of interest, size and location of hidden objects such as objects within a container or hidden behind a wall, biometric data such as facial features, and others. The processing of the signal characteristics may be performed by the electronic device or the signal characteristics may be communicated to a secondary computing device for additional processing. In some embodiments, the image data may be correlated with and assigned to objects within an optical image captured by an optical camera. The image data may also be added to a virtual reality model or augmented reality model of the area of interest.

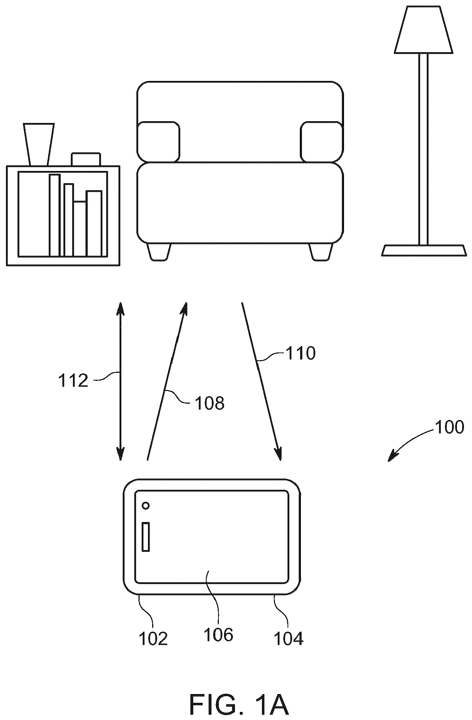

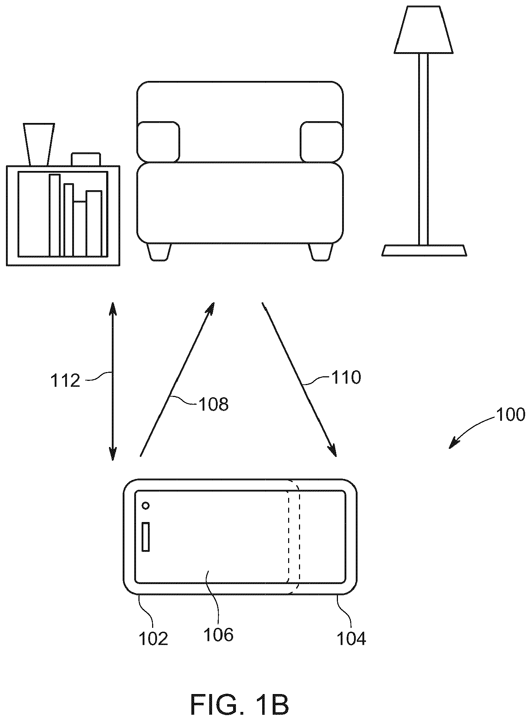

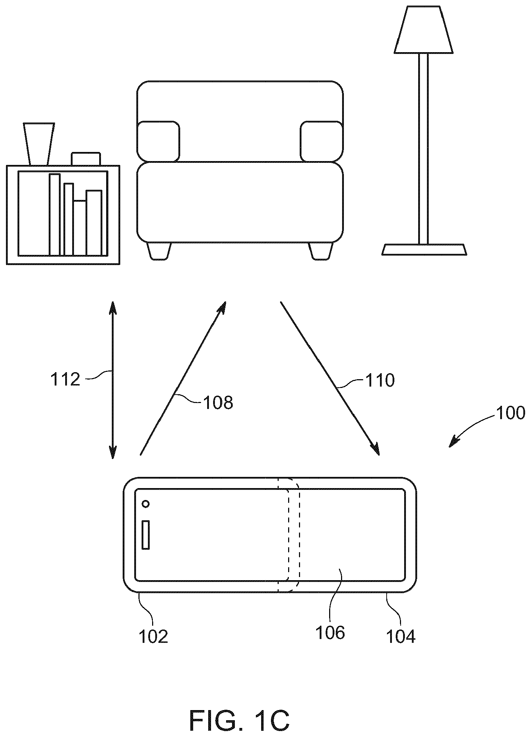

Figs. 1A, 1B, and 1C illustrate an example synthetic aperture imaging technique in accordance with embodiments. In this example, the handheld electronic device 100 is a smart phone with a scrolling display screen and includes two components, referred to herein as the first component 102 (left) and second component 104 (right), coupled in a movable relationship. The first component 102 may include a recess configured to hold the second component 104, allowing it to slide into or out of the recess. To expand the screen, the user extends the second component 104, which causes the screen 106 to move out of the recess, creating a larger screen surface for the user. Sliding the second component 104 back into the recess causes the screen 106 to retract back into the recess, resulting in a more compact device configuration.

The first component 102 includes a signal source (not shown) to direct outgoing signals into an area of interest. The outgoing signals 108 interact with objects in the area of interest, causing reflection or scattering of the signals. For purposes of the present description, the term "return signals" refers to signals that are reflected or scattered from objects in the area of interest due to the outgoing signals. The second component includes a signal receiver (not shown) to detect the return signals 110 received from objects within the area of interest.

The outgoing signals 108 may be radio waves or acoustic waves. In embodiments that use radio waves, the signal source may use an antenna or antenna array that is part of a transceiver included in the first component and the signal receiver may use an antenna or antenna array that is part of a transceiver included in the second component. Any suitable radio frequencies may be used, including the 5G mmWave bands (24.25 to 27.5 GHz, 37 to 43.5 GHz, 45.5 to 47 GHz, 47.2 to 48.2 and 66 to 71 GHz). Other possible frequency bands may include ISM mmWave frequency bands, 24 to 24.5 GHz and 61 to 61.5 GHz, or less preferably ISM or other frequency bands outside the mmWave range.

In embodiments that use sound waves, the signal source may be an acoustic speaker and the signal receiver may be a microphone. In the case of a smartphone, the speaker and microphone may be the speaker and microphone used for telephonic voice communications. The sound waves used for acoustic imaging may have a wavelength in the range of 5 to 30 KHz, or more preferably 10 to 22 KHz.

In the example shown in Figs. 1A, 1B, and 1C, the user can perform synthetic aperture imaging by holding the first component approximately still while extending the second component or allowing the second component to be extended under the control of a motor. Throughout the extension, the signal source emits signals into the area of interest. The transmitted signals may be emitted continuously through the measurements or as pulses. Meanwhile, the signal receiver receives the signals reflected from the area of interest at a plurality of selected positions and stores the signal characteristics. As used herein, the term "baseline" refers to the path between the measurement positions, and the length of the baseline will be the distance between the most distant measurement positions. In the embodiment shown in Figs. 1A, 1B, and 1C, the baseline length will be equal to or less than the length difference between the fully compacted position and the fully extended position.

Fig. 1A shows the handheld device is a fully retracted position, which represents one of the measurement positions. Fig. 1B shows the handheld device is an intermediate stage of extraction, which represents a second measurement position. Fig. 1C shows the handheld device at the fully extract position, which represents a third measurement position. Although three measurement positions are shown, it will be appreciated that any suitable number of measurements may be made at additional positions throughout the range of motion. At each measurement position, signal characteristics of the reflected signals are recorded as well as the position of the second component relative to the first component. The position information may be expressed as a distance between the signal source and the signal receiver or may be used to determine a distance between the signal source and the signal receiver. Techniques for determining the distance between the signal source and the signal receiver are described below.

In some embodiments, the handheld device may also include a second signal receiver (not shown) disposed in the first component and configured to receive additional return signals 112. The second receiver may be part of the same transceiver as the signal source and may use the same antenna or antenna array. Time division multiplexing may be used to transition the transceiver between a transmission mode and a receiving mode. In acoustic embodiments, the second receiver may be a second microphone.

The second signal receiver is configured to maintain a constant distance relationship with the signal source. The return signals 112 received at the second signal receiver may be processed to generate motion correction data to correct for user movement of the handheld device during the measurement process.

In some embodiments, the display screen 106 may be used to generate a user interface that enables the user to perform the imaging and guides the user during the measurement process. For example, the user interface may instruct the user to hold the device still at the beginning of the measurement process and aim the device toward the area of interest. Once the user has succeeded in holding the device sufficiently still, the device can begin the measurement process and instruct the user to begin extending the second component. As the second component is extended, the user interface may guide the user to perform the extension at a suitable speed and may alert the user if the extension is too fast or too slow. Additionally, the user interface may alert the user regarding excessive device motion affecting the first component.

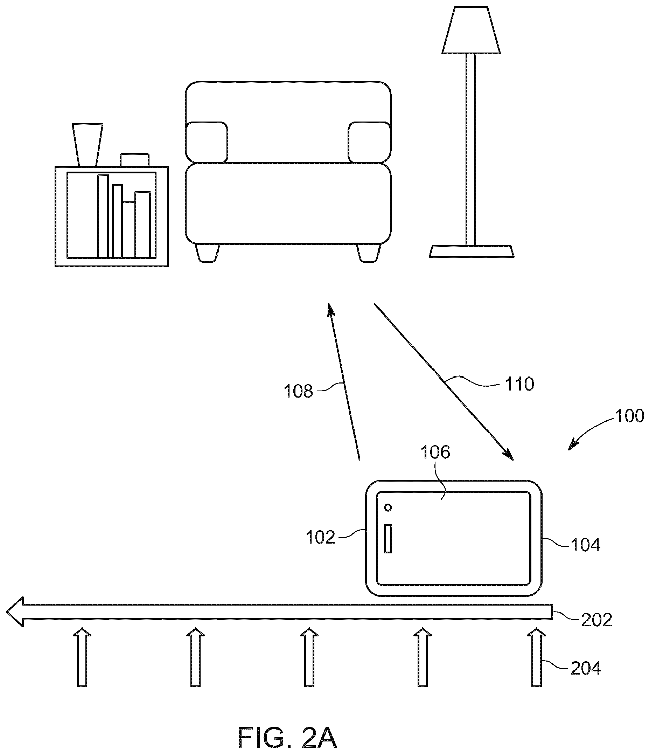

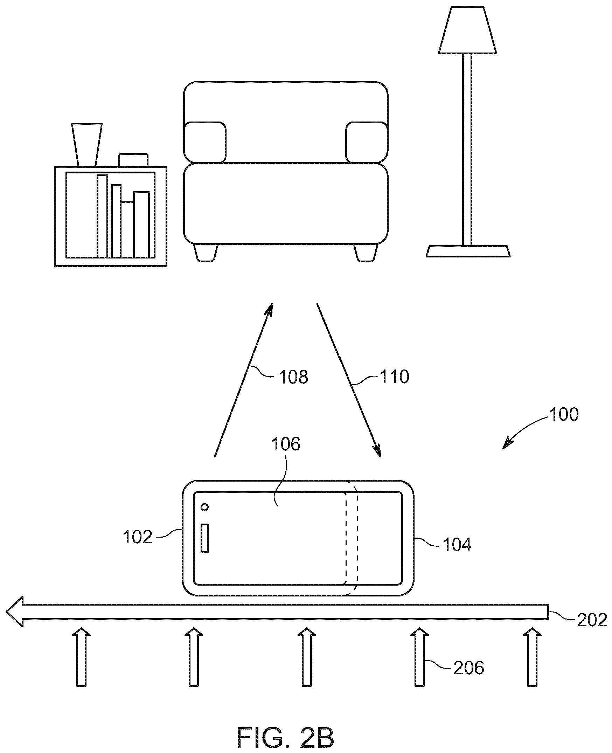

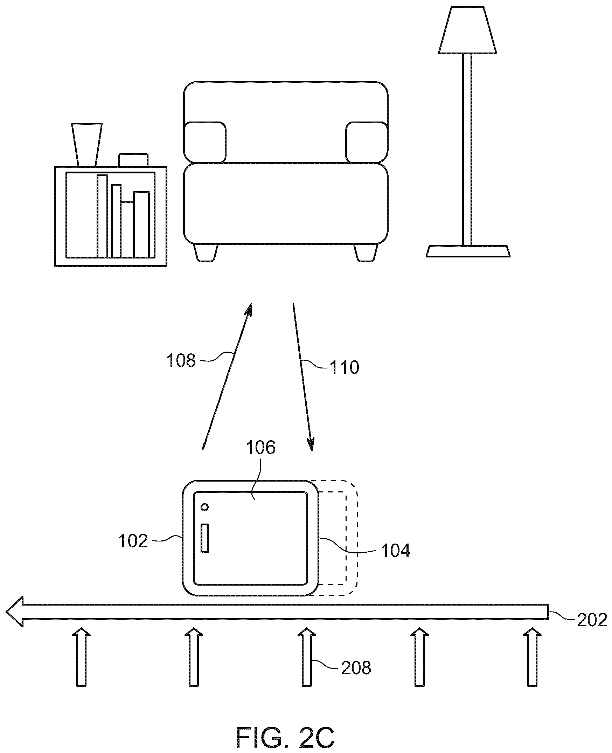

Figs. 2A, 2B, and 2C illustrate another example synthetic aperture imaging technique in accordance with embodiments. As in Fig. 1, the handheld electronic device 100 is a smart phone with a scrolling display screen and includes a signal source (not shown) in a first component 102 to direct outgoing signals 108 into an area of interest and a signal receiver (not shown) is a second component 104 to detect the return signals 110 received from objects within the area of interest. As in Fig. 1, the outgoing signals 108 and return signals 110 may be radio waves or acoustic waves.

In the example shown in Figs. 2A, 2B, and 2C, the user can perform synthetic aperture imaging by moving the handheld device 100 through a path approximating a baseline 202. In this example, the baseline length can be greater than the length of the handheld device 100 at the fully extended position.

Throughout the user controlled movement, the signal source emits outgoing signals 108 into the area of interest. The transmitted signals may be emitted continuously through the measurements or as pulses. Meanwhile, the signal receiver receives the signals reflected from the area of interest at a plurality of selected positions and stores the signal characteristics. The selected positions may be predetermined positions in space selected by the imaging algorithm. In some embodiment wherein the signal receiver includes an array of receiver elements (e.g., an antenna array), the selected positions may be determined based on the spacing of the elements in the signal receiver array in order to simulate a larger array with equal spacing.

As the user moves the handheld device 100, the device can determine its speed and position using sensors such as accelerometers. When the handheld device's receiver is at a desired position, the signal characteristics of the returns signals at that position can be captured.

To correct for imperfections in the motion of the user, the second component can be adjusted automatically to change the position of the signal receiver. The adjustment of the second component may be performed by a motor in response to signals from a processor to change the position of the signal receiver to correct for positional inaccuracies during the user movement.

Fig. 2A shows the handheld device 100 at the start of the measurement process, and also shows the intended measurement positions selected by the measurement algorithm. At this stage, the handheld device 100 is at an intermediate state of extension to enable the second component to extend or retract as directed by the processor. At the start of the measurement, the signal characteristics of the return signals may be captured at the first measurement position 204 either prior to or just as the user begins moving the handheld device 100.

Fig. 2B shows the position of the handheld device at the second measurement position 206 as the user is moving the handheld device 100 over the baseline 202. In this example, the second component 104 has been extended as compared to the starting configuration in order to position the signal receiver at the second measurement position 206. Extension of the second component may be performed to correct for user movement that is faster than an expected speed.

Fig. 2C shows the position of the handheld device at the third measurement position 208. In this example, the second component has been retracted as compared to the starting configuration in order to position the signal receiver at the third measurement position 208. Retraction of the second component may be performed to correct for user movement that is slower than an expected speed.

Accordingly, although the user movement may be inconsistent, the automatic processor-controlled adjustment of the second component 104 enables the signal receiver to move at a consistent speed through the measurement process. This can enable the handheld device 100 to capture signal characteristics at regular time intervals, while maintaining positional accuracy.

In some embodiments, the display screen 106 may be used to generate a user interface that enables the user to perform the imaging and guides the user during the measurement process. For example, the user interface may guide the user to move the handheld device at a suitable speed and guide the user to maintain an approximately linear path of travel.

The signal characteristic measurements collected as described above in relation to Figs 1A through 2C may be processed to generate image data for objects in the area of interest. The image data can include material properties of the objects, such as whether a particular surface is metal, plastic, glass, or others. In some embodiments, the image data can also indicate the presence of hidden or subsurface objects. For example, the image data may identify of subsurface features behind a wall such as metal or wooden beams. The image data may indicate the position, size, and shape of such structures as well as the material composition.

The handheld device may also include an optical camera disposed on a surface opposite the display screen and aimed toward the area of interest. The camera may be used to capture one or more optical images of the area of interest either before the measurement process begins or at various intervals during the measurement process. The optical images and the image data generated by synthetic aperture imaging may be added to a virtual reality or augmented reality model of the area of interest.

Additionally, it will be appreciated that the embodiments described in Figs. 1A-2C are examples and that various additional procedures may be performed in accordance with embodiments. For example, to stabilize the handheld device, the device may be supported by a support structure such as a table or stand. The techniques described herein can also be used with other types of handheld electronic devices, including devices with sliding surfaces, and hinged components. Embodiments of handheld electronic devices with sliding surfaces can include devices with retractable keyboards, or a retractable antenna section, for example. In some embodiments, the device 100 may be a foldable device such as a smart phone or laptop computer with a clamshell form factor. In such embodiments, the user may be guided to open and close the device, and the relative motion of the antennas may be calculated via trigonometry based on the hinge angle and the device geometry.

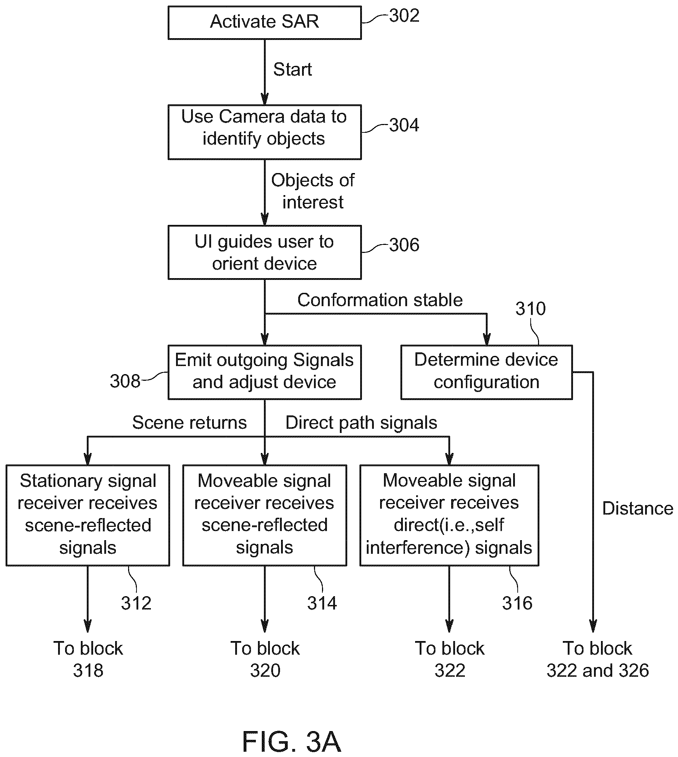

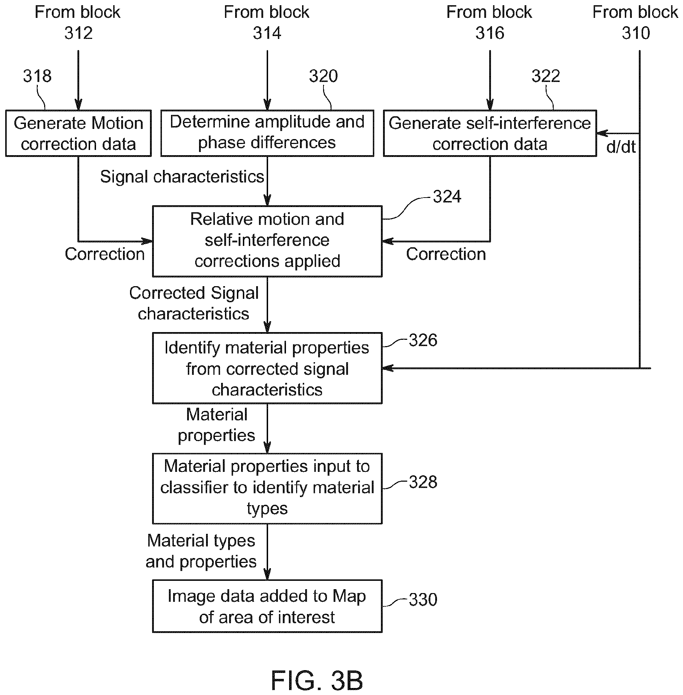

Figs. 3A and 3B show a process flow diagram illustrating an example method for performing synthetic aperture imaging using a handheld electronic device. The method may be performed using any suitable handheld electronic device such as the device described in relation to Figs. 1A-2C. The handheld device used in Fig. 3 can include two portions coupled in a moveable relationship, such as the smartphone with a slidable screen. The handheld device can also include a display screen with a user interface that guides the user through the imaging process. It will be appreciated the processes shown in Fig. 3 may be performed in an order different from what is shown, and that the method 300 may also include fewer or additional processes depending on the design considerations of a particular embodiment. The method may begin at block 302.

At block 302, the user activates synthetic aperture imaging. The synthetic aperture imaging feature may be presented to the user in a graphical user interface or may be activated by the press of a button, for example.

At block 304, image data from the optical camera may be used to identify objects. The image data may be used to segment particular images from the scenery. The identified object may be indicated in the user interface, for example, using boundary lines displayed over the scene. The user may then select a particular object or area to be scanned.

At block 306, the user is guided to orient the device. When a suitable orientation is achieved relative to the selected objects, and the device is in a suitable position (e.g. fully closed or fully open), the process can proceed to block 308 and the measurement process begins.

At block 308, the handheld device starts to emit outgoing signals. The outgoing signals may be pulses of sound waves or radio signals. The signal source is disposed on the first component. Additionally, at block 310 the device is adjusted so that the position of the signal receiver changes relative to the signal transmitter. For example, the screen may be extended in the case of a smart phone with a scrolling screen. The adjustment may be user controlled or motor controlled.

At block 310, the device configuration is determined by determining the relative position or orientation of the first component and second component. The device configuration may be performed using one or more electromechanical sensors to measure, for example, the extension of the screen. In devices with clamshell form factors, the configuration may be determined by a hinge angle sensor. The determined device configuration may be processed to compute the distance between the signal source and the signal receiver. The configuration measurements are performed in parallel with the signal emissions in block 308 so that each outgoing signal pulse corresponds with a known configuration.

In some embodiments, the device configuration can be determined acoustically using the devices audio equipment. To determine the device configuration acoustically, the device may emit audio signals from either the first component or the second component and detect the audio signals in the other component. Features of the received sounds such as the delay or frequency attenuations may be used to determine the device configuration by comparing the received sounds to a pre-existing model of the acoustic propagation on the device.

During the signal emission and configuration measurements performed at blocks 308 and 310, the device also performs a several signal measurements at blocks 312, 314, and 316 using one or more signal receivers. The signal receivers can include a moveable signal receiver in the second component, which is moving relative the signal source, and a stationary signal receiver in the first component, which remains stationary relative the signal source.

At block 312, the stationary signal receiver receives scene reflected signals. At block 314, the moveable signal receiver receives scene reflected signals. At block 316, the moveable signal receiver receives direct signals, which are signals received from the signal source directly without being transmitted in the area of interest. Each of the received signals corresponds with specific pulses emitted at block 308. The signal collection shown in blocks 312, 314, and 316 may occur in any order or in parallel. Processing of the signal data is shown in Fig. 3B.

At block 318, motion correction data are generated using the signal data collected by the stationary signal receiver at block 312. Any changes in the phase or amplitude of signals received from the stationary signal receiver may be treated as being due to user hand motion or motion of objects in the area of interest. These changes in the phase and amplitude can be used to generate the motion correction data so that the effects of the undesired motions can be eliminated from the measurement data.

At block 320, signal characteristics of the signals received by the moveable signal receiver at block 314 are determined. Determining signal characteristics may include determining phase and amplitude differences of the signals between each measurement position.

At block 322, self-interference correction data is generated. The self-interference correction data is intended to remove the effects of the signals received by the moveable signal receiver directly from the signal source without reflecting from the scene. In some embodiments, the self-interference correction data is generated by detecting a Doppler effect. For example, movement of the moveable signal receiver relative to the signal source will cause a Doppler shift in the frequency of the direct signals, which will be more pronounced if the signals are sound waves. Any signals received by the moveable signal receiver that exhibit a Doppler shift may be attributed to direct signals and used to generate self-interference correction data for removing the direct signals from the measurement data.

In some embodiments, the rate of change of distance (d/dt) between the signal source and the signal receiver as measured directly from the distance information computed at block 310 may be used to further enhance the Doppler shift correction technique. For example, the rate of change of distance may be used to determine an expected Doppler shift and signals outside this expected range may be rejected. In this way, the rate of change of distance may enable the system to determine what level (if any) of Doppler shift should be corrected for.

The self-interference correction data may include the phase and amplitude of the self-interference signals. The self-interference correction data can also be generated by other techniques such as filtering out signals that have a shorter time of arrival. In addition to or in place of the above algorithmic self-interference correction techniques, hardware-based analog cancelation techniques can also be employed. A suitable analog canceller may include one or more taps for sampling the transmitted signal in addition to attenuators, phase shifters, and delay elements to generate a cancelation signal at the receiver.

At block 324, the motion correction data generated at block 318 and the self-interference correction data generated at block 322 is applied to the signal characteristics determined at block 320 to generate corrected signal characteristics, e.g., corrected amplitude and phase difference data. For example, phase and amplitude differences that are measured by the stationary signal receiver at each measurement position may be subtracted from the amplitude and phase difference data measured at the moveable signal receiver for the same measurement positions. Additionally, the phase and amplitude of the Doppler shifted signals measured by the moveable signal receiver at each measurement position may be subtracted from the amplitude and phase difference data measured at the moveable signal receiver for the same measurement positions.

At block 326, the corrected signal characteristics are used to identify material properties of objects in the area of interest. The material properties may include information such as the roughness of a surface, structural features such as shape and size, position within the area of interest, material type, the presence of layered objects such as layers of a wall, and others. The material properties may be determined based on the amplitude of the reflected signals, the timing with which the received signals are received, position dependent phase differences in the received signals, and others.

At block 328, the material properties identified at block 326 may be input to a classifier to identify material types. The classifier may be trained using a training data set that includes the measured properties of known materials. For example, the area of interest may include a window or a mirror handing on a wall. The material properties of this object may indicate that the surface of the object has a smooth surface indicative of glass. The amplitude of the reflections may indicate that the surface corresponds with a mirror (higher reflectivity) or a window (lower reflectivity). Comparison of the measured material properties with material properties of known materials in the training data set can enable the classifier to differentiate between a mirror or a window.

At block 330, the material properties and/or material types (collectively referred to as image data) may be added to a model of the area of interest which can also include the optical images collected at block 304. The model may be a virtual reality model or augmented reality model. The material types and properties may be used to enhance the visual appearance of objects in the images. For example, an object in the area of interest such as a floor may be identified as wood or carpeting. Corresponding textures may be added to the model so that the optical appearance in the images generated by the model appear more realistic compared to images generated from the optical characteristics alone.

The material types and properties (image data) may be used to enhance the acoustic properties of objects in the model. For example, a virtual reality model may be used to generate audio effects. By identifying material properties and types, the acoustic properties of the model may be enhanced to be more realistic. For example, walking on a wooden floor would be associated with one sound effect, while walking on carpet could be associated with another sound effect. Additionally, the sound reflections in the virtual reality can be recreated more realistically by assigning acoustic properties to the objects based on the identified material types.

The image data may also relate to hidden objects that are not optically visible, such as objects beneath the surface of another object or contained within another object. Such hidden objects may also be added to the model. For example, objects behind a wall surface such as wooden or metal beams may be added to the model. Such hidden objects may be used to enhance the visual or acoustic properties of the model. For example, in an augmented reality application, the presence of a stud or metal pipes or wires in a wall may be visually indicated.

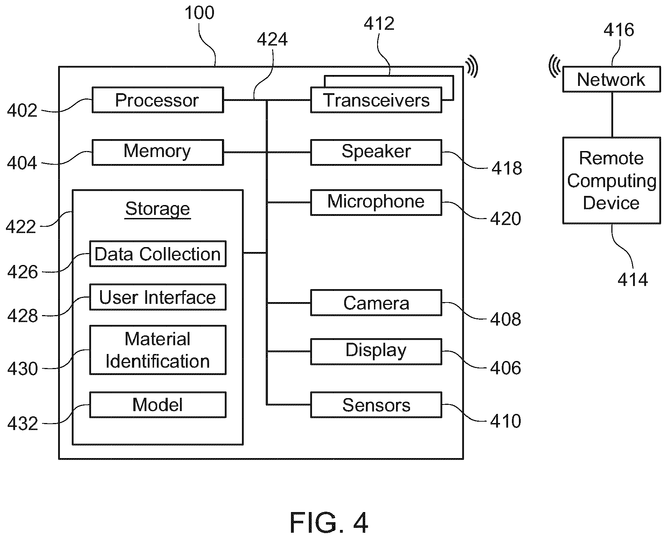

Fig. 4 is a block diagram of an example device configured for synthetic aperture imaging in accordance with embodiments. The device 100 may be used to implement any of the techniques described herein. The device 100 may be a handheld electronic device, such as, a smart phone, a laptop computer, or tablet computer, among others. In some embodiments, the device 100 may be a smart phone with a scrolling screen or a clamshell form factor. The device 100 may include a processor 402 configured to execute stored instructions, as well as a memory device 404 that stores instructions that are executable by the processor 402. The processor may be any suitable type of processor including a single core or multiple core central processing unit (CPU), a microcontroller, Application Specific Integrated Circuit (ASIC), a Field Programmable Gate Array (FPGA), and others.

The memory device 404 can include random access memory (e.g., SRAM, DRAM), read only memory (e.g., EPROM, EEPROM, etc.), flash memory, or any other suitable memory systems. The memory device 404 can be used to store data and software code that configure the processor to perform the various functions described herein.

The device 100 can also include a display 406 and a camera 408 configured to capture still images or video. Images or video captured by the camera 408 can be sent to various other components of the device 100, such as the display 406.

The device can also include sensors 410 for determining the configuration of the device 100, which may include the degree of extension of a screen, the angle of a hinge, device orientation and positions, and others. The configuration information may be used for, among other things, determining the distance between the signal source and the signal receiver. Sensor data may be reported to other components of the device 100 through a dedicated application programming interface (API) that interfaces with the sensors 410.

The device 100 can also include subsystems that may be used as signal sources and signal receivers. For example, the device 100 may include one or more transceivers 412 coupled to antennas or antenna arrays. The transceivers 412 may operate in any frequency band suitable for synthetic aperture radar imaging, including the mmWave band or others. The transceivers 412 may also be used for various communication functions of the device 100, including WiFi and cellular communications. The transceivers 412 may enable the device 100 to communicate with a remote computing device 414 wirelessly through a network 416. The device 100 can also include an acoustic speaker 418 and microphone 420, which may also be used as the signal source and signal receiver, respectively.

The device 100 may also include a storage device 422. The storage device 422 may be any non-transitory computer-readable medium configured for long-term non-volatile storage of data and computer program code. The storage device 422 may be any type of physical memory device, such as a hard drive, a flash drive, and the like.

Communications between various components of the device 100 can be performed over one or more data busses 424 using any suitable communication protocols, such as Mobile Industry Processor Interface (MIPI) D-PHY, PCIe, SPI, USB, among others. The bus architecture shown in Fig. 4 is just one example of a bus architecture that can be used with the techniques disclosed herein. In some examples, the data bus 424 may be a single bus that couples the components of the device 100 according to a particular communication protocol. Furthermore, the device 100 can also include any suitable number of data busses of varying types, which may use different communication protocols to couple specific components of the computing device according to the design considerations of a particular implementation. Various additional components may be included depending on the design considerations for a particular implementation.

The device 100 includes means for causing the device 100 to perform the operations described herein. Such means may include the processor 402, the memory device 404, and computer code modules stored to the storage device 422. The computer code modules may include a data collection module 426 for performing the synthetic aperture imaging measurements, which can include emitting outgoing signals, receiving and reflected signals, measuring the device configuration, capturing optical images, performing correction algorithms for canceling the effects of user movement or self-interference, etc. The code modules may also include a user interface module 428 that can generate a user interface to be rendered on the display 406 and that guides the user during the data collection as described herein. For example, the user interface can provide options that enable the user to initiate the imaging process. During the imaging process, the user interface can guide the user in how to manipulate the device to acquire suitable data points.

The code modules may also include a material identification module 430 that processes the collected data to identify material properties and/or material types. The material properties and types may be correlated with objects in the area of interest capture by the optical camera. The material properties and/or types, also referred to herein as image data, can be stored to a model 432 representing the area of interest and assigned to the correlated objects in the optical image. The model 432 may be a virtual reality model or augmented reality model. In some embodiments, image data may be displayed on the display 406. For example, in the case of an augmented reality model, a hidden object may be shown on the display and overlaid onto the optical image captured by the camera 408 in real time.

In some embodiments, the device 100 collects the synthetic aperture imaging data (signal characteristics, distance between source and receiver, etc.) and then transfers the data to another device, such as remote computing device 414, for additional processing to determine the material properties and types.

It is to be understood that the block diagram of Fig. 4 is not intended to indicate that the device 100 is to include all of the components shown in Fig. 4. Rather, the device 100 can include fewer or additional components not illustrated in Fig. 4. Furthermore, the components may be coupled to one another according to any suitable system architecture, including the system architecture shown in Fig. 4 or any other suitable system architecture.

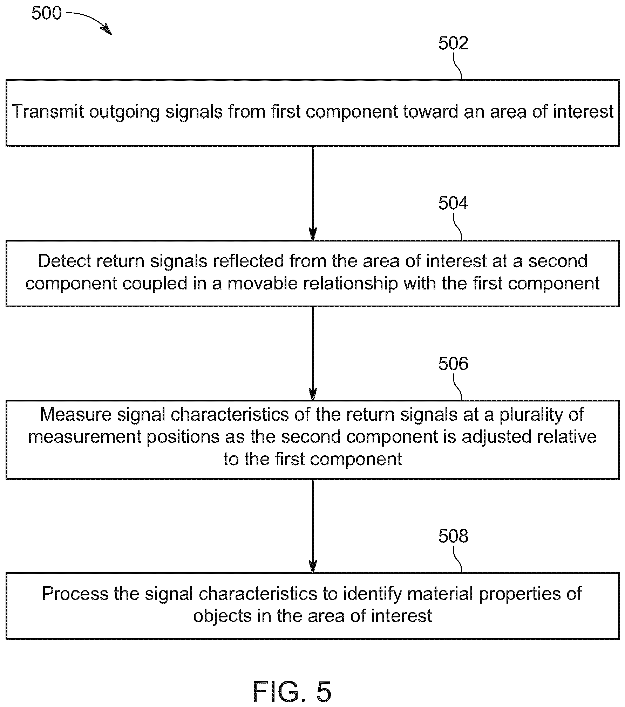

Fig. 5 is a process flow diagram summarizing a method of performing synthetic aperture imaging in accordance with embodiments. The method may be performed by any suitable electronic device having at least two components connected together in a movable relationship, including the handheld electronic device 100 described in Figs. 1-4. The device can also include a display screen with a user interface that guides the user through the imaging process. It will be appreciated the processes shown in Fig. 5 may be performed in any order and that some may be performed in parallel. The method 500 may also include fewer or additional processes depending on the design considerations of a particular embodiment. Additionally, it will be appreciated that the method is performed by hardware or a combination of hardware and computer program code such as a processor executing instructions stored to a computer readable. The method may begin at block 502.

At block 502, outgoing signals are transmitted from a signal source disposed at the first component toward an area of interest. The signals may be radio signals or acoustic signals delivered in a series of pulses or chirps. Additionally, an image of the area of interest may be captured using an optical camera.

At block 504, return signals reflected from the area of interest due to the outgoing signals are detected by a signal receiver disposed at the second component is coupled in a movable relationship with the first component.

At block 506, signal characteristics of the return signals are measured at a plurality of measurement positions as the second component is adjusted relative to the first component to change a distance between the signal source and signal receiver. The plurality of measurement positions may be predetermined according to a specified spacing. In some embodiments, first component is held stationary while the second component is adjusted to obtain the plurality of measurement positions. In some embodiments, the entire device is swept over a baseline larger than the device, and the adjustment of the second component is performed to correct the alignment of the signal receiver to obtain the plurality of measurement positions.

In addition to the return signals detected by the signal receiver of the second component (i.e., the movable receiver), additional return signals may be detected by a second signal receiver disposed at the first component. The second signal receiver is configured to maintain a constant distance relationship with the signal source and is therefore referred to as the stationary signal receiver. The additional return signals may be processed to generate motion correction data to be applied to the signal characteristics of the return signals collected by the movable receiver to correct for user movement.

To cancel self-interference between the signal source and the signal receiver, signals received at the moveable signal receiver may be processed to detect a Doppler shift in the signals, indicating that the Doppler shifted signals are being received directly from the signal source without being emitted into the area of interest. Detection of the Doppler shift can be used to cancel the self-interference.

Additionally, the distance between the signal source and the signal receiver is determined for each measurement point. Distance can be determined using electromechanical sensors or using sound waves generated by an acoustic speaker disposed at the first component and a microphone disposed at the second component.

At block 508, the signal characteristics are processed to identify material properties of objects in the area of interest. Additionally, the material properties may be further processed to identify material types that correspond with the material properties. The material properties can be correlated with objects within the optical image captured at block 502 and added to a virtual reality model of the area of interest.

The techniques described herein can also be implemented in other types and combinations of circuitry. As used in this application, the term "circuitry" may refer to hardware-only circuit implementations or implementations that use a combination of hardware circuits and computer code, such as software or firmware. Hardware-only implementations may include implementations in analog or digital circuitry or a combination thereof. Implementations in a combination of hardware and computer code include processors programmed with computer code stored to one or more memory devices, which may be incorporated into the processor or accessible by the processor through a memory access interface.

It is to be understood that what is described above is what is presently considered the preferred embodiments. However, it should be noted that the description of the preferred embodiments is given by way of example only and that various modifications may be made without departing from the scope as defined by the appended claims.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one" or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims. For example, features described in the preceding description may be used in combinations other than the combinations explicitly described above. Additionally, although functions have been described with reference to certain features, those functions may be performable by other features whether described or not. Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasize an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

While endeavoring in the foregoing specification to draw attention to those features believed to be of importance, it should be understood that the Applicant may seek protection via the claims in respect of any patentable feature or combination of features hereinbefore referred to and/or shown in the drawings whether or not emphasis has been placed thereon.

## Claims

1. An apparatus (100) comprising means for:
directing outgoing signals (108) from a first component (102) toward an area of interest;
detecting, at a second component (104), return signals (110) reflected from the area of interest due to the outgoing signals, wherein the first component is coupled in a movable relationship with the second component; and
measuring signal characteristics of the return signals at a plurality of measurement positions as the second component is adjusted relative to the first component to change a distance between the means for directing and the means for detecting;
wherein the signal characteristics are processed to generate image data for objects in the area of interest.

2. The apparatus of claim 1, comprising means for:
detecting return signals (112) at the first component; and
processing the return signals detected at the first component to generate motion correction data to be applied to the signal characteristics to correct for user movement of the apparatus.

3. The apparatus of claim 1 or claim 2, wherein the outgoing signals and return signals are sound waves.

4. The apparatus of claim 1 or claim 2, wherein the outgoing signals and return signals are radio frequency (RF) signals.

5. The apparatus of any preceding claim, comprising means for measuring the distance between the means for directing and the means for detecting based on propagation of sounds waves generated at the first component and received at the second component.

6. The apparatus of any preceding claim, comprising means for cancelling self-interference between the means for directing and the means for detecting based on a Doppler shift of signals received at the means for detecting directly from the means for directing without being emitted into the area of interest.

7. The apparatus of any preceding claim, comprising means for capturing (408) an optical image of the area of interest, wherein the image data comprises material properties that are correlated with and assigned to objects within the optical image.

8. The apparatus of any preceding claim, wherein at least some of the image data relates to subsurface features within the area of interest.

9. The apparatus of any preceding claim, wherein the image data comprises material properties that are added to a virtual reality model (432) of the area of interest.

10. The apparatus of any preceding claim, comprising:
means for guiding (428) a user of the apparatus to move the apparatus through a path approximating a baseline; and
means for adjusting the second component to change the position of the means for detecting to correct for positional inaccuracies during user movement.

11. A method, comprising:
transmitting (308, 502) outgoing signals (108) from a signal source (412, 418) disposed at a first component (102) toward an area of interest;
detecting (314, 504) return signals (110) at a signal receiver (412, 420) disposed in a second component (104);
measuring (320, 506) signal characteristics of the return signals at a plurality of measurement positions as the second component is adjusted relative to the first component to change a distance between the signal source and signal receiver; and
processing (326, 508) the signal characteristics to identify material properties of objects in the area of interest.

12. The method of claim 11, comprising computing the distance between the signal source and the signal receiver based on propagation of sound waves generated by an acoustic speaker disposed at the first component and a microphone disposed at the second component.

13. The method of claim 11 or 12, comprising:
measuring a Doppler shift of signals received at the signal receiver; and
canceling self-interference between the signal source and the signal receiver based, at least in part, on the Doppler shift.

14. A computer-readable medium (422) comprising computer program code for causing an apparatus (100) to perform at least the following:
direct a signal source (412, 418) disposed at a first component (102) to transmit (308, 502) outgoing signals (108) toward an area of interest;
direct a signal receiver (412, 420) disposed at a second component (104) to detect (314, 504) return signals (110) reflected from the area of interest due to the outgoing signals, wherein the second component is coupled in a movable relationship with the first component; and
measure (320, 506) signal characteristics of the return signals at a plurality of measurement positions as the second component is adjusted relative to the first component to change a distance between the signal source and signal receiver;
wherein the signal characteristics are processed (326, 508) to identify material properties of objects in the area of interest.

15. The computer-readable medium of claim 14, comprising computer program code for causing the apparatus to:
direct a second signal receiver disposed at the first component to receive additional return signals (112) reflected from the area of interest, wherein the second signal receiver is configured to maintain a constant distance relationship with the signal source; and
process the additional return signals to generate motion correction data (318) to be applied to the signal characteristics of the return signals to correct for user movement.
